# EUROPEAN PATENT SPECIFICATION

(11) **EP 0 864 595 B1**
(45) Date of publication and mention of the grant of the patent: **16.08.2001**
(21) Application number: 98103562.9
(22) Date of filing: 02.03.1998
(51) Int. Cl.: C08G 61/08, C08F 132/00

(54) **Supported catalysts for the ringopening metathesis polymerization of cycloolefins**
Trägerkatalysatoren für die ringöffnende Metathesepolymerisation von Cycloolefinen
Catalyseurs supportés pour la polymérisation par métathèse par ouverture de cycle des cyclooléfines

(30) Priority: 13.03.1997 EP 97104263
(43) Date of publication of application: 16.09.1998
(73) Proprietor: Borealis Technology Oy, 06101 Porvoo (FI)
(72) Inventor: Stelzer, Franz, Dr., 8020 Graz (AT); Ernst, Eberhard, Dr., 4223 Katsdorf (AT); Buchacher, Petra, Dr., 8020 Graz (AT); Reussner, Jens, Dr., 4201 Gramastetten (AT); Eder, Elisabeth, 8010 Graz (AT)
(74) Representative: Matthews, Derek Peter

(56) References cited:
- EP-A- 0 534 388
- EP-A- 0 685 494

## Description

### 1. Field of the invention:

This invention relates to supported catalysts for the ring-opening metathesis polymerization ( ROMP ) of cycloolefins and to the ROMP process.

### 2. Description of the "prior art":

Since the discovery of metathesis, a great variety of heterogeneous and homogeneous catalysts and initiators has been developed as described in literature, for instance : *Olefin Metathesis ,* K.J.Ivin, Academic Press LTD, 1983 ; *Olefin Metathesis and Ring Opening Polymerization of Cycloolefins ,* V.Dragutan, J.Wiley & Sons Ltd., 1985 ; *Prog.Polym.Sci*., D.S.Breslow, 1993, Vol.18, 1141-1195.

The main part of the "classical" homogeneous inititiators (or catalysts) consists of transition metal halides or oxyhalides ( e.g.: WCl₆, MoCl₅, WOCl₄) and organometallic compounds ( e.g.: R3AI, Me₄Sn, Et4Pb ) as activating agents. Since 1980 a new class of homogeneous metathesis initiators - namely stable transition metal alkylidene compounds - has been developed by R.R. Schrock. These first well-defined metathesis initiators permit basic investigations of metathesis- and ROMP-reactions.

A ROMP-initiator is a catalyst system consisting of one, two or several components, the main one being a compound of a transition metal which initiates the ring-opening polymerization of cycloolefins. In this reaction the single bonds of these melecules are cleaved at the double bond, producing unsaturated linear polymers of the polyalkenylene type, called polyalkenamers, like e.g. polyoctenamer (Olefin Metatheses and Ring Opening Polymerization of Cycloolefins, V. Dragutan, J. Wiley & Sons Ltd., 1985, pages 11 and 27) or polycycloolefins, like polynorbornene derivatives for instance, preferably with high molecular weights (WO 95/01388). A Schrock-type initiator is an alkylidyne- or alkylidene complex of a transition metal preferably of W, Mo, Ru or Ta. In general, a Schrock carbene complex contains a nucleophilic carbene C-atom due to a central atom with high oxidation state and subsituents R without π-donating ability. The strong metal carbene C backbonding and the absence of -I substituents at the C determines the nucleophilic nature of the alkylidene complex (Organometallchemie; Elschenbroich, Salzer; Teubner Studienbücher Chemie; 3. ed., 1988, page 6).

In spite of their high activity and their outstanding stereospecificity, technical applications of these systems have not been realized yet. The reasons for this fact are the costly synthesis of Schrock's carbene complexes, their sensitiveness towards water and oxygen and the homogeneous reaction conditions. The heterogenization of these systems could be a major step towards their technical application for the synthesis of metathesis products or ROMP polymers.

At the moment most of the technical processes in the field of metathesis- or ROMP-reactions use heterogeneous catalyst systems, which are described in many publications and patents.
The main part of these systems consists of transition metal oxides e.g.: Re₂O₇, WO₃, MoO₃ supported on inorganic carriers like Al₂O₃, SiO₂, Al₂O₃/SiO₂, MgO, Nb₂O₅, TiO₂.
One of the most important and very well studied catalyst systems - Re₂O₇ on inorganic oxides, optionally combined with activating organometallic compounds - is described in many patents, for example in DE 4009910 or DE 3229419.

Furthermore, transition metal halides and oxyhalides can also be supported on inorganic materials, as described for instance in EP 526101 (WCl₆-SiO₂) or in JP 03174406 (WCl₅- MOCl₅- ReOCl₃-SiO₂). Though there is a great variety of heterogeneous metathesis catalysts partly applied
in industry, only few examples of supported carbene- or carbyne complexes are known, e.g. from EP 456373.
The synthesis of surface-anchored alkylidyne tungsten complexes has been realized by J.M.Basset & al.(*J*.*Chem*.*Soc*., *Dalton Trans.* (1994), (12), 1723-9 ).
The reaction of alkylidyne tungsten complexes with SiO₂ and reduced Phillips catalysts respectively was carried out by K.Weiss et al. in order to synthesize heterogeneous Schrock-type carbene complexes (J. Organomet. Chem. 355 (1988) 273-280; Angew. Chem. 101(1989)1, 75-77).
The object of the present invention was to find new catalysts for the ROMP, based on an inorganic support and on transtion metal compounds with high polymerization activity. According to the invention, such new catalysts were provided, which are based on Schrock-type initiators (catalysts) supported on special supports,

### 3. Description of the invention:

The present invention accordingly provides a supported catalyst for the ring-opening metathesis polymerization (ROMP) of cycloolefins, comprising the reaction product of
a) a catalyst support containing
   aa) hydrophilic inorganic oxides of elements of main groups IIa, IIIa or IVa, or of subgroup IVb of the periodic table, or a mixture of said oxides, or mixed oxides of said elements,
   ab) aluminoxanes and optionally Al-alkyls,
   ac) and polyfunctional organic crosslinkers,
b) and of Schrock-type catalysts based on alkylidene- or alkylidyne-complexes of transition elements of subgroups IVb to VIII of the periodic table.

The invention further provides a process for preparing a supported catalyst for the ring-opening metathesis polymerization (ROMP) of cycloolefins, comprising the steps of
a) drying at a temperature of from 110 to 800 °C hydrophilic inorganic oxides of elements of main groups IIa, IIIa or IVa, or of subgroup IVb of the periodic table, or a mixture of said oxides, or mixed oxides of said elements,
b) then optionally reacting the dried oxides with aluminoxanes or Al-alkyls or a mixture of both,
c) then reacting said oxides obtained according to (a) or (b) with aluminoxanes and subsequently with polyfunctional crosslinkers, or, in the alternative, reacting said oxides obtained according to (a) or (b) with aluminoxanes and polyfunctional crosslinkers at the same time,
d) then reacting the crosslinked oxides of (c) with Schrock-type catalysts based on alkylidene- or alkylidyne-complexes of transition elements of subgroups IVb to VIII of the periodic table.

This way to prepare supported catalyst systems by use of Schrock-type initiators (catalysts) as precursor is a further step towards their technical application, thereby achieving high activity with the advantages of heterogeneous catalysis.
The present invention provides a new supported polymerization catalyst and a new method for preparation of supported polymerization catalysts or catalyst components by using a special crosslinked inorganic oxide carrier material. On the basis of an inorganic oxide, which is treated with an aluminoxane and a polyfunctional organic compound, it is possible to produce a crosslinked carrier material with an enlarged surface (EP-A-685494). This new type of crosslinked carrier material is used according to the invention for supporting conventional Schrock-type initiators of metathesis catalysts.

The catalyst support (a) and its preparation is already described in EP-A- 0 685 494. In this application the catalyst support is used together with metallocene catalysts, which differ from the metathesis catalyst type component (b) of this invention mainly in their defined molecular structure containing cyclic hydrocarbon groups like cyclopentadienyl-, indenyl- or fluorenyl-groups, which can form a sandwich structure with a central metal atom. The catalyst support (a) has preferably a very low toluene-soluble aluminoxane content which is preferably from 0.01 to 1.4 mol%, in particular from 0.02 to 1.0 mol%, particularly preferably from 0.04 to 0.08 mol%, based on moles of Al in the aluminoxane used, measured at 70° C.

Suitable hydrophilic oxides in the catalyst support (a) according to the invention are all commercial inorganic oxides, or a mixture of different oxides or mixed oxides thereof. Suitable are, for example, oxidic materials prepared in accordance with DE-C 870.242 or US 5,380,687 by the high-temperature hydrolysis process from gaseous metal chlorides or silicon compounds, but also all other hydrophilic oxidic materials having the properties indicated. Preference is given to Al-oxide, Si-oxide, Mg-oxide, Ti-oxide and Zr-oxide, like, e.g., an Al-oxide Aluminia C and Aerosil 130 from Degussa, or silicas of the Grace Davison type.

The oxides are preferably finely divided with a mean particle size in the range of 10 nm to 300 µm, more preferred in the range of 3 to 100 µm and particularly preferred in the colloidal range, preferably as very finely divided particles at from about 10 to 110 nm.

Suitable aluminoxanes are according to formula III for the linear type: 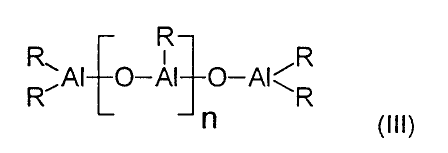 and/or formula IV: 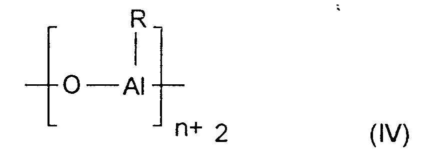 for the cyclic type, where in the formulas III and IV the substituents R can be identical or different and are a C₁-C₆-alkyl group and n is an integer from 1-50. Preferably, the radicals R are identical and are methyl, isobutyl, phenyl or benzyl. The aluminoxane can be prepared in various ways according to known processes. One possibility is, for example, the reaction of aluminum alkyls with aluminum sulfate containing water of crystallization (Hoechst EP-A-302424). In the present invention, preference is given to using commercial methylaluminoxane (MAO, from Witco). The molar ratio of aluminum (as aluminoxane) to surface hydroxyl groups is between 1 and 50, preferably between 1 and 20, particularly preferably between 5 and 10.

Suitable polyfunctional organic crosslinkers for the catalyst support (a) are all organic compounds having more than one functional group, which can react with a metal-carbon bond. Preference is given to using bifunctional crosslinkers. Such bifunctional organic compounds can be, for example, aliphatic or aromatic diols, aldehydes, dicarboxylic acids, primary or secondary diamines, diepoxide compounds. To avoid interfering side reactions or reaction products, which would necessitate additional purification, preference is given to using aliphatic and aromatic diols, diamines or diepoxide compounds or mixtures thereof. Particular preference is given to butanediol, hexanediol, decanediol, bisphenol A and 1,4-butanediol diglycidyl ether. In these cases, tetrahydrofuran is preferably used as solvent. Trifunctional or higher functional crosslinkers which can be used are, for example, triethanolamine, glycerol or tetraethylenepentamine.
Component (b) of the supported catalysts is preferably a Schrock-type alkylidene complex of W, Mo or Ru. Especially preferred compounds are shown in formulas I and II: 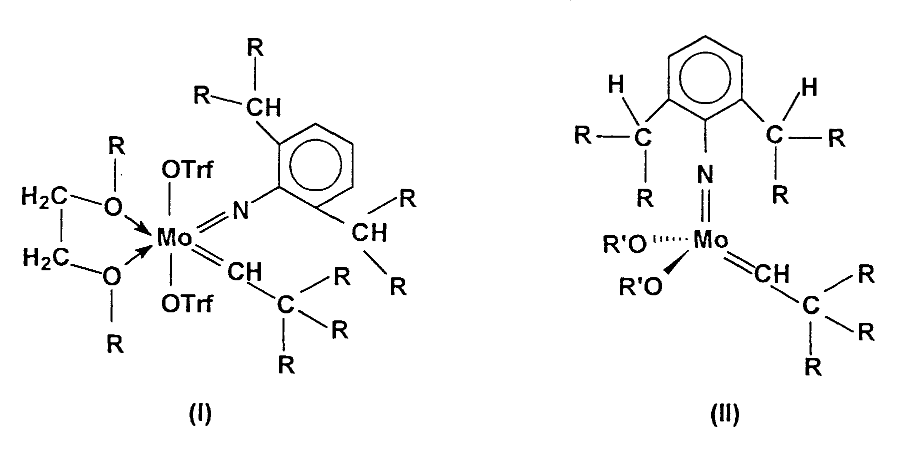 R = CH₃ ; -OTrf = SO₃-CF₃ ; R' = -C(CH₃)₃, -C(CF₃)₂(CH₃)

The synthesis of Schrock-type carbene complexes (II) is carried out via 4 steps. The last one is the reaction of compound (I) with lithium alkoxides to give compound (II). Concerning the initiation of metathesis- and ROMP-reactions, compound (I) itself is inactive, whereas compound (II) is active. The activity mainly depends on the nature of the alkoxy ligands. But if compound (I) is immobilized on the support material of this invention, not only a heterogenization but also an activation of the transition metal compound takes place. Accordingly the interaction of the support material of this invention with the transition metal salts leads to their activation and additional activating agents like organoaluminium compounds are not necessary.

It is also possible to use transition metal compounds of groups Vb to VIII, preferably of groups VIb to Vllb, and most preferably of group VIb as component (b) of the supported catalysts. Such suitable compounds are, for instance salts like halides or oxyhalides of e.g.: W, Mo, Re ( WCl₆, MOCl₅, ReCl₅, WOCl₄). Such salts are commercially available.

The synthesis of the alkylidene or alkylidyne complexes (I) and (II) is carried out, e.g, according to *J.Am*. *Chem.Soc.,* R.R.Schrock et al., 112(1990), 3875.

The preparation of the crosslinked carrier or support (a) is known and was illustrated in EP-A-0 685 494. For instance, it is possible to use a hydrophilic, finely divided alumina, like ALUMINA C (Degussa), without internal surfaces. After calcination at a temperature between 110°C and 800°C, preferably between 120°C and 400°C under nitrogen atmosphere, a solution of alumoxane, like methylalumoxane (e.g. 30 weight-% in toluene; Fa. Witco), is added dropwise to a stirred suspension of the. oxide in an amount sufficient to provide a mole ratio of aluminum (alumoxane) to surface hydroxyl groups (alumina) of from about 50 to 1, preferably about 10 to 5.

The suspension mediums used in this step are preferably inert aromatic hydrocarbons, like e.g. toluene. The suspension can be stirred for about 10 minutes to about one hour, preferably 30 minutes. Thereafter the suspension medium is removed and the residual solid is dried in vacuo. The cross-linking is performed for instance by reacting this solid with a bi- or morefunctional organic agent, like Bisphenol A (Merck). For this purpose, the solid is suspended again in a solvent, which is also able to dissolve the crosslinking agent, preferably THF (tetrahydrofurane) is used. The solution of Bisphenol A can be added dropwise to this suspension at room temperature and stirred for about 15 minutes to about one hour, favourably for about 15 minutes. Then the solvent is removed in vacuo at a temperature higher then the boiling point of the solvent, for THF preferably at 70°C. Thereafter the solid is suspended and stirred again in toluene. After 5 minutes, the solvent can be decanted and the residue is dried in vacuo between 70 and 120°C, favourably at about 90°C. The final solid crosslinked carrier or support is a free flowing powder.

The heterogenization of the transition metal compounds (b) is carried out in a solution of aliphatic or aromatic hydrocarbons, preferably in toluene. The transition metal compound - dissolved in toluene - and the carrier are reacted at a mass ratio of carrier: transition metal compound of 10:1 to 2:1, but preferably of 2:1. This suspension is stirred for e.g. 20h at room temperature under dry nitrogen atmosphere conditions. Then the powder is washed for several times ( e.g.: ten times ) with an excess of toluene, centrifuged and dried.
The supported initiators according to the invention can be used for polymerizing cycloolefins and, above all, strained cycloolefins like norbornene derivatives, with ring opening. All the polymerizations are preferably carried out in toluene for 10-20h.

The heterogenization method revealed in this invention leads to heterogeneous ROMP-initiators which offer several advantages. The activity of the supported ROMP catalyst is rather high compared to the activity of their homogeneous counterparts
considering the small amount of active species on the surface. If compound (I) or (II) is used as transition metal compound, even cycloolefins with low ring strain, like cyclooctene are ring opened.
If compound (I) or transition metal salts are immobilized on the support material of this invention, not only a heterogenization but also an activation of the transition metal compounds takes place. By this way, the addition of activating organometallic compounds like R₃Al, which are expensive and dangerous, is not required. Compound (II) is already ROMP-active.
By the activation mentioned above, the last reaction of Schrock's carbene synthesis, which requires long purification procedures and gives low yields (60-75%) can be avoided and a new catalyst system is created.
In certain cases (polymerization of the optically active Methyl-N-(1-phenylethyl)-2-azabicyclo[2.2.1]hept-5-ene-3-carboxylate), the heterogeneous initiator containing compound (I) even shows a high stereospecificity and leads to polymers which are exclusively linked all-trans head-tail.
The supported catalysts according to the invention offer the common advantages of heterogeneous catalysts. The heterogenization makes possible the technical application of this initiators in already existing plants. Because of the heterogeneous nature of the initiator, no purification is needed for consecutive reactions like e.g. hydrogenation.

The supported catalysts according to the invention can be used for the ring opening metathesis polymerization (ROMP) of cycloolefins. The invention accordingly provides also a process for the ROMP of cycloolefins, wherein the supported catalysts according to the invention are used as ROMP catalysts. The polymerization is performed as known from the literature, at temperatures from -40 to +200 °, preferably from +10 to +80 °C, in continuous or discontinuous processes, in solution, suspension- or gasphase-processes.
Possible cycloolefins for the ROMP are disclosed e.g. in WO 95/01388, preferred cycloolefins are norbornene, cyclobutene, cyclopentene, cyclooctene and cyclooctadiene.

The invention is illustrated by the following examples:

### 4. Examples:

All preparations and polymerizations were carried out in a glove box under dry nitrogen atmosphere conditions.

### I.) Preparation of the crosslinked carrier (support):

10 g Al₂O₃ (Alumina C from Degussa) are calcinated at 400°C for 4 h under nitrogen atmosphere. A solution of methylaluminoxane (30 weigth-% in toluene; 69,7 mmol Al; 14,36g MAO; MAO from Witco) is slowly added to a suspension of 7,04g dried Al₂O₃ (0,99 mmol OH/g Al₂O₃) in 120 ml toluene . The reaction mixture is stirred for 30 min. After drying under vacuum, the resulting solid is suspended in 70 ml of THF. To this suspension, a solution of Bisphenol A (6,27 mmol; 1,43 g Bisphenol A solved in 10 ml THF) is added dropwise and stirred for 45 min at room temperature. Then the solvent is removed at 50°C under vacuum. The solid carrier is again suspended with 100 ml toluene, stirred for 5 min and subsequently the solvent is decanted. After these procedure, the solid part is dried in vacuum at 90°C. The final solid carrier is a free flowing powder.

### II.) Preparation of the supported initiator (supported catalyst):

### Initiator A: compound ( I )

A solution of 100mg of compound ( I ) in 1ml dry toluene is added to 200mg of the carrier in a tube. Compound (I) is prepared according to R. Schrock, J.Am. Chem. Soc. 112 (1990) 3875. This suspension is stirred for 20h at room temperature. Then 3-4ml dry toluene are added, the suspension is stirred and the powder centrifuged. The washing solution is removed and this procedure is repeated for several times. The last washing solution is put in a tube with 0,3ml cyclooctene to see whether there are still soluble active species left. No polymerization occurs. The washing solution is investigated by atomic absorption spectroscopy (AAS) and no molybdenum is found. The resulting powder is dried in vacuo at room temperature.

### Initiator B1 and B2: compound (II) : B1 [R = C(CH₃]₃]; B2 [R = C(CH₃)(CF₃)₂]

A solution of 20mg of compounds ( II ) in 1ml dry toluene is added to 200mg of the support material. Compound (II) is prepared according to R. Schrock, J.Am. Chem. Soc. 112 (1990) 3875. This suspension is stirred for 20h at room temperature. Then 3-4ml dry toluene are added, the suspension is stirred and the powder centrifuged. The washing solution is removed and this procedure is repeated as long as there is no soluble active species left in the last washing solution ( proved by the reaction with cyclo-octene). The resulting powder is dried in vacuo at room temperature.

### Initiator C: WCl₆

A solution of 100mg of WCl₆ in 3ml dry toluene is added to 200mg of the support material and stirred for 20h at room temperature. Then 3-4ml dry toluene are added, the suspension is stirred and the powder centrifuged. The washing solution is removed and this procedure is repeated for several times. The resulting powder is dried in vacuo at room temperature.

### Initiator D: ReCl₅

A solution of 50mg of ReCl₅ in 3ml dry toluene is added to 200mg of the carrier. After stirring for 20h at room temperature, 3-4ml dry toluene are added. The suspension is stirred and the powder centrifuged. The washing solution is removed and this procedure is repeated for several times. The last washing solution is put in a tube with 0,3ml cyclooctene to see whether there are still soluble active species left. The resulting powder is dried in vacuo at room temperature.

### III.) Polymerization examples

### Polymerization A1)

To a suspension of 20 mg of initiator A in 0,5ml toluene, 157mg norbornene in 0,5ml toluene are added. The polymerization solution is stirred for 20h at room temperature. The highly viscous solution is diluted with 3ml CH₂Cl₂, the polymer is precipitated in 40ml MeOH and dried (Yield: 99%).

### Polymerizations A2)

To a suspension of the initiator A in 0,5ml toluene, different amounts of monomers, as listed in Table 1, are added. The polymerization solution is stirred for 20h at room temperature. The viscous solution is diluted with 3ml CH₂Cl₂, the polymer is precipitated in 40ml MeOH and dried. The amounts of initiator and of monomers, and the yields are listed in Table 1.

**Table 1**

| **monomer** | **initiator A [mg]** | **monomer [mg]** | **yield [%]** |
|---|---|---|---|
| norbornadiene | 22,2 | 210,1 | 94 |
| 5-vinylnorbornene | 19,5 | 209,5 | 84 |
| bicyclo[2.2.1]hept-5-en-2-yl- benzoate | 20,3 | 205,2 | 97 |
| cis-1,5-cyclooctene | 19,8 | 208 | 34 |

### Polymerizations B)

To a suspension of the initiator B1 (or B2) in 0,5ml toluene, the amount of monomer as listed in Tables 2 and 3 is added. The polymerization solution is stirred for 20h at room temperature. The viscous solution is diluted with 3ml CH₂Cl₂, the polymer is precipitated in 40ml MeOH and dried.

**Table 2**

| B1: | | | |
|---|---|---|---|
| **monomer** | **initiator A [mg]** | **monomer [mg]** | **yield [%]** |
| norbornene | 20,1 | 133 | 97 |
| bicyclo[2.2.1]hept-5-en-2-yl- benzoate | 19,2 | 173,6 | 80 |
| cis-1,5-cyclooctene | 20,5 | 210 | 37 |

**Table 3**

| B2: | | | |
|---|---|---|---|
| **monomer** | **initiator A [mg]** | **monomer [mg]** | **yield [%]** |
| norbornene | 19,1 | 133 | 98 |
| 5-vinylnorbornene | 20,3 | 200,9 | 98 |
| bicyclo[2.2.1]hept-5-en-2-yl- benzoate | 18,9 | 175,3 | 79 |
| cis-1,5-cyclooctene | 19,8 | 210 | 70 |

### Polymerization C1)

To a suspension of 20,6mg of initiator C in 0,5ml toluene, 157mg of norbornene in 0,5ml toluene are added. The polymerization solution is stirred for 20h at room temperature. The highly viscous solution is diluted with 3ml CH₂Cl₂, the polymer is precipitated in 40 ml MeOH and dried (Yield: 97%).

### Polymerization D1)

To a suspension of 20,5mg of initiator D in 0,5ml toluene, 210mg of cyclooctene are added. The polymerization solution is stirred for 20h at room temperature. The highly viscous solution is diluted with 3ml CH₂Cl₂, the polymer is precipitated in 40ml MeOH and dried (Yield: 44%).

## Claims

1. A supported catalyst for the ring-opening metathesis polymerization (ROMP) of cycloolefins, comprising the reaction product of
a) a catalyst support containing
aa) hydrophilic inorganic oxides of elements of main groups IIa, IIIa or IVa, or of subgroup IVb of the periodic table, or a mixture of said oxides, or mixed oxides of said elements,
ab) aluminoxanes and optionally Al-alkyls,
ac) and polyfunctional organic crosslinkers,
b) and of Schrock-type catalysts based on alkylidene- or alkylidyne-complexes of transition elements of subgroups IV b to VIII of the periodic table.

2. The supported catalyst according to claim 1, wherein the hydrophilic inorganic oxides are selected from the group of Al-oxide, Si-oxide, Mg-oxide, Ti-oxide and Zr-oxide.

3. The supported catalyst according to claim 1 or 2, wherein the Schrock-type catalysts are based on alkylidene- or alkylidyne-complexes of W, Mo or Ru.

4. The supported catalyst according to any of claims 1 to 3, wherein bifunctional organic crosslinkers are used.

5. The supported catalyst according to claim 4, wherein the organic crosslinkers are selected from the group of diols, diamins or diepoxides.

6. A process for preparing a supported catalyst for the ring-opening metathesis polymerization (ROMP) of cycloolefins, comprising the steps of
a) drying at a temperature of from 110 to 800 °C hydrophilic inorganic oxides of elements of main groups IIa, IIIa or IVa, or of subgroup IVb of the periodic table, or a mixture of said oxides, or mixed oxides of said elements,
b) then optionally reacting the dried oxides with aluminoxanes or Al-alkyls or a mixture of both,
c) then reacting said oxides obtained according to (a) or (b) with aluminoxanes and subsequently with polyfunctional crosslinkers, or, in the alternative, reacting said oxides obtained according to (a) or (b) with aluminoxanes and polyfunctional crosslinkers at the same time,
d) then reacting the crosslinked oxides of (c) with Schrock-type catalysts based on alkylidene- or alkylidyne-complexes of transition elements of subgroups IVb to VIII of the periodic table.

7. A process for the ring-opening metathesis polymerization (ROMP) of cycloolefins, wherein supported catalysts as claimed in any of claims 1 to 5 are used as ROMP catalysts.

8. Use of supported catalysts as claimed in any of claims 1 to 5 for the ring-opening metathesis polymerization of cyclolefins.

## Patentansprüche

1. Trägerkatalysator für die Ringöffnungsmetathesepolymerisation (ROMP) von Cycloolefinen umfassend das Reaktionsprodukt aus
a) einem Katalysatorträger, der
aa) hydrophile anorganische Oxide der Elemente aus den Hauptgruppen IIa, IIIa oder IVa, oder der Nebengruppe IVb des Periodensystems, oder eine Mischung der besagten Oxide, oder gemischte Oxide der besagten Elemente,
ab) Aluminoxane und optional Al-Alkyle,
ac) und polyfünktionelle organische Quervernetzer,
enthält
b) und aus Schrock-Typ Katalysatoren, die auf Alkyliden- oder Alkylidinkomplexen von Übergangselementen der Nebengruppen IVb bis VIII des Periodensystems basieren.

2. Trägerkatalysator nach Anspruch 1, worin die hydrophilen anorganischen Oxide aus der Gruppe von Al-Oxid, Si-Oxid, Mg-Oxid, Ti-Oxid und Zr-Oxid ausgewählt werden.

3. Trägerkatalysator nach Anspruch 1 oder 2, worin die Schrock-Typ Katalysatoren auf Alkyliden- oder Alkylidinkomplexen aus W, Mo oder Ru basieren.

4. Trägerkatalysator nach einem der Ansprüche 1 bis 3, worin bifunktionale organische Quervernetzer verwendet werden.

5. Trägerkatalysator nach Anspruch 4, worin die organischen Quervernetzer aus der Gruppe der Diole, Diamine oder Diepoxide ausgewählt werden.

6. Ein Verfahren zur Herstellung eines Trägerkatalysators zur Ringöffnungsmetathesepolymerisation (ROMP) von Cycloolefinen, welches die Schritte von
a) Trocknen bei einer Temperatur von 110 bis 800 °C hydrophiler anorganischer Oxide der Elemente aus den Hauptgruppen IIa, IIIa oder IVa oder der Nebengruppe IVb des Periodensystems, oder eine Mischung de besagten Oxide, oder gemischte Oxide der besagten Elemente
b) dann optional die getrockneten Oxide mit Aluminoxanen oder Al-Alkylen oder einer Mischung aus beiden zur Reaktion bringen,
c) dann besagte Oxide, die nach (a) oder (b) erhalten werden, mit Aluminoxanen und anschließend mit polyfunktionellen Quervernetzern zur Reaktion bringen, oder alternativ besagte Oxide, die nach (a) oder (b) enthalten werden, mit Aluminoxanen und polyfunktionellen Quervernetzern zur selben Zeit zur Reaktion bringen,
d) dann die quervernetzten Oxide aus (c) mit Schrock-Typ Katalysatoren, die auf Alkyliden- oder Alkylidinkomplexen von Übergangselementen der Nebengruppen IVb bis VIII des Periodensystems basieren, zur Reaktion bringen,
umfaßt.

7. Ein Verfahren für die Ringöffnungsmetathesepolymerisation (ROMP) von Cycloolefinen, worin Trägerkatalysatoren, wie in einem der Ansprüche 1 bis 5 beansprucht, als ROMP-Katalysatoren verwendet werden.

8. Verwendung von Trägerkatalysatoren, wie in einem der Ansprüche 1 bis 5 beansprucht, für die Ringöffnungsmetathesepolymerisation von Cycloolefinen.

## Revendications

1. Catalyseur sur support pour la polymérisation par métathèse avec ouverture de cycle (ROMP) de cyclooléfines, comprenant le produit de la réaction de :
a) un support de catalyseur contenant
aa) des oxydes minéraux hydrophiles des éléments des groupes principaux IIa, IIIa ou IVa, ou du sous-groupe IVb du tableau périodique, ou un mélange desdits oxydes, ou des oxydes mixtes desdits éléments,
ab) des aluminoxanes et éventuellement des alkyles-Al,
ac) et des agents de réticulation organiques polyfonctionnels,
b) et des catalyseurs de type Schrock à base de complexes de type alkylidène ou alkylidyne des éléments de transition des sous-groupes IVb à VIII du tableau périodique.

2. Catalyseur sur support selon la revendication 1, dans lequel les oxydes minéraux hydrophiles sont choisis dans le groupe des oxydes d'aluminium, oxydes de silicium, oxydes de magnésium, oxydes de titane et oxydes de zirconium.

3. Catalyseur sur support selon la revendication 1 ou 2, dans lequel les catalyseurs du type Schrock sont à base de complexes de type alkylidène ou alkylidyne du W, Mo ou Ru.

4. Catalyseur sur support selon l'une quelconque des revendications 1 à 3, dans lequel des agents de réticulation organiques bifonctionnels sont utilisés.

5. Catalyseur sur support selon la revendication 4, dans lequel les agents de réticulation organiques sont choisis dans le groupe constitué des diols, diamines ou diépoxydes.

6. Procédé pour la préparation d'un catalyseur sur support pour la polymérisation par métathèse avec ouverture de cycle (ROMP) de cyclooléfines, comprenant les étapes consistant à :
a) sécher à une température de 110 à 800°C des oxydes minéraux hydrophiles des éléments des groupes principaux IIa, IIIa ou IVa, ou du sous-groupe IVb du tableau périodique, ou un mélange desdits oxydes, ou des oxydes mixtes desdits éléments,
b) puis faire réagir éventuellement les oxydes séchés avec des aluminoxanes ou des composés alkyles-Al ou un mélange de ceux-ci,
c) puis faire réagir lesdits oxydes obtenus conformément à l'étape (a) ou l'étape (b) avec des aluminoxanes et ensuite avec des agents de réticulation polyfonctionnels, ou en variante, faire réagir simultanément lesdits oxydes obtenus conformément à l'étape (a) ou l'étape (b) avec des aluminoxanes et des agents de réticulation polyfonctionnels,
d) puis faire réagir les oxydes réticulés de l'étape (c) avec des catalyseurs de type Schrock à base de complexes de type alkylidène ou alkylidyne des éléments de transition des sous-groupes IVb à VIII du tableau périodique.

7. Procédé pour la polymérisation par métathèse avec ouverture de cycle (ROMP) de cyclooléfines, dans lequel les catalyseurs sur support tels que revendiqués selon l'une quelconque des revendications 1 à 5 sont utilisés en tant que catalyseurs ROMP.

8. Utilisation de catalyseurs sur support selon l'une quelconque des revendications 1 à 5 pour la polymérisation par métathèse avec ouverture de cycle des cyclooléfines.
